# EUROPEAN PATENT SPECIFICATION

(11) **EP 3 726 959 B1**
(45) Date of publication and mention of the grant of the patent: **06.09.2023**
(21) Application number: 18840076.6
(22) Date of filing: 24.12.2018
(51) Int. Cl.: A01G 5/00, A01G 9/08, B07C 5/04

(54) **SYSTEM FOR SORTING PLANTS**
SYSTEM ZUM SORTIEREN VON PFLANZEN
SYSTÈME DE TRI DE PLANTES

(30) Priority: 22.12.2017 BE 201705985
(43) Date of publication of application: 28.10.2020
(73) Proprietor: SMO bvba, 9900 Eeklo (BE)
(72) Inventor: MOLLET, Sander, 9991 Adegem (BE)
(74) Representative: Brantsandpatents bv
(86) International application number: PCT/IB2018/060580
(87) International publication number: WO 2019/123438

(56) References cited:
- EP-A2- 0 552 449
- US-B2- 8 359 787

## Description

### TECHNICAL FIELD

The present invention relates to a system for sorting plant material, preferably for sorting saplings, a method of sorting plants using said system and the use of said system for sorting plants.

### BACKGROUND

Systems for sorting saplings are known and are usually based on a conveyor belt system in which saplings are positioned individually. The length of each individual sapling is then measured, after which the plant is sorted into a storage container provided for this purpose, for example depending on the length or other characteristics of said sapling.

One of the disadvantages of the known systems is that biological material, as well as sand and/or earth material, enters the mechanical parts of the conveyor belt and causes significant wear and tear. In addition, such material may lead to process interruptions. The present invention seeks to provide a solution to such problems or shortcomings.

EP0552449 A2 describes a system for sorting plants, such as saplings, based on one or more shape features, such as length, said system comprising at least a sensor for determining one or more shape features of a plant in a sorting segment; and an electronic control system for receiving an electronic signal from said sensor.

US 8 359 787 B2 discloses a buffering device for temporarily storing containers with plants in a buffer space includes a supply device for supplying containers, a disposer for disposing a number of supplied containers in a row extending in a first direction, a distributor provided with at least one controllable gripper for gripping a row of containers, wherein the distributor is movable substantially in a second direction which differs from the first direction, and is movable above the disposer.

### SUMMARY OF THE INVENTION

For this purpose, the invention provides a system for sorting plants, as well as a method for sorting plants using the system according to the invention.

In a first aspect, the invention provides a system for sorting plants, such as saplings, based on one or more shape features, such as length, said system comprising at least:
- a sorting disc, radially subdivided into multiple sorting segments, each sorting segment being suitable for receiving a plant, and each sorting segment being configured with a sorting floor having an open and closed position;
- at least a first buffer disc, preferably static, arranged under said sorting disc and radially subdivided into multiple buffer segments, each buffer segment being suitable for buffering multiple plants and each buffer segment being configured with a buffer floor having an open and closed position;
- a collection disc, arranged under said first buffer disc and radially subdivided into multiple collection segments, each collection segment being suitable for receiving multiple plants;
- a sensor or camera for determining one or more shape features of a plant in a sorting segment; and
- an electronic control system for receiving an electronic signal from said sensor, controlling said sorting floor, thus passing said plant in said sorting segment to a suitable buffer segment, and controlling said buffer floor.

In a second aspect, the present invention comprises a method for sorting plants based on one or more shape features, such as length, with a system according to the first aspect of the invention, said method comprising the steps of:
- placing a plant in a sorting segment;
- radially moving said sorting segment to above a suitable buffer segment;
- the vertical transfer of said plant from said sorting segment to said buffer segment;
- the vertical transfer of said plant from said buffer segment to a suitable collection segment; and
- the removal of a collection of plants from a collection segment.

In a third aspect, the present invention comprises a use of a system according to the first aspect of the invention, for sorting plants such as saplings based on one or more shape features, such as length.

### BRI EF DESCRI PTI ON OF THE DRAWINGS

The explicit characteristics, advantages and objects of the present invention will become further apparent to a person skilled in the art to which the invention pertains after reading the following detailed description of the embodiment of the invention and the attached figures herein. To that end, the figures serve to further illustrate the invention, without thereby limiting the scope of the invention which is defined by the appended claims.

Figures 1 to 14 represent a simplified representation of system according to the present invention.
Figure 1 shows a perspective view of an embodiment of the present invention.
Figure 2 shows a simplified perspective view depicting an embodiment of the present invention.
Figure 3 shows a top view representation of an embodiment of the present invention.
Figure 4 shows a side view section of an embodiment of the present invention.
Figure 5 shows a schematic representation of an embodiment of the present invention.
Figure 6 shows a top view of a sorting disc of an embodiment of the present invention.
Figure 7 shows a schematic representation of a sorting disc of an embodiment of the present invention.
Figure 8 shows a top view representation of a buffer disc of an embodiment of the present invention.
Figure 9 shows a top view of a removal disc of an embodiment of the present invention.
Figure 10 shows a schematic representation of a removal disc of an embodiment of the present invention.
Figure 11 shows a detail representation of a sorting segment of an embodiment of the present invention.
Figure 12 shows a detail representation of an actuator roller of an embodiment of the present invention.
Figure 13A shows a schematic representation of an actuator rail in a closed position of an embodiment of the present invention.
Figure 13B shows a schematic representation of an actuator rail in an open position of an embodiment of the present invention.
Figure 14A shows a tangential view of a buffer segment of an embodiment of the present invention.
Figure 14B shows a radial view of a buffer segment of an embodiment of the present invention.
Figure 14C shows a schematic representation of a buffer segment of an embodiment of the present invention.

### DETAILED DESCRIPTION OF THE INVENTION

Unless otherwise defined, all terms used in the description of the invention, including technical and scientific terms, have the meaning as commonly understood by the skilled person in the technical field of the invention. For a better assessment of the description of the invention, the following terms are explained explicitly.

In this document, 'a' and 'the' refer to both the singular and the plural, unless the context clearly implies otherwise. For example, 'a segment' means one or more than segments.

When 'around or 'about' is used in this document with a measurable quantity, a parameter, a time period or moment in time, and the like, then variations are intended of +/- 20% or less, preferably +/- 10% or less, more preferably +/- 5% or less, even more preferably +/- 1% or less, and even more preferably approx. 0.1% or less than and of the cited value, if such variations are applicable in the described invention. However, it must be understood that the value of a quantity used where the term 'around' or 'about' is used, is itself specifically disclosed.

The terms 'comprise', 'comprising', 'consist of', 'consisting of', provided with', 'include', 'including', 'contain', 'containing', 'encompass', 'encompassing' are synonyms and are inclusive or open terms indicating the presence of what follows and which do not exclude or prevent the presence of other components, features, elements, members, steps known from or described in the prior art.

The citation of numerical intervals by the endpoints comprises all integers, fractions and/or real numbers between the endpoints, including these endpoints.

In a first aspect, the invention provides a system for sorting plants, such as saplings, based on one or more shape features, such as length, said system comprising at least:
- a sorting disc, radially subdivided into multiple sorting segments, each sorting segment being suitable for receiving a plant, and each sorting segment being configured with a sorting floor having an open and closed position;
- at least a first buffer disc, preferably static, arranged under said sorting disc and radially subdivided into multiple buffer segments, each buffer segment being suitable for buffering multiple plants and each buffer segment being configured with a buffer floor having an open and closed position;
- a collection disc, arranged under said first buffer disc and radially subdivided into multiple collection segments, each collection segment being suitable for receiving multiple plants;
- a sensor for determining one or more shape features of a plant in a sorting segment; and
- an electronic control system for receiving an electronic signal from said sensor, controlling said sorting floor, thus passing said plant in said sorting segment to a suitable buffer segment, and controlling said buffer floor, thus passing said plant in said buffer segment to a suitable collection segment.

Preferably, said sorting disc, said buffer disc and said collection disc are concentrically arranged, and are also provided with corresponding circular diameter. This allows the sorting segments, buffer segments and collection segments to move above each other. At an appropriate position, the plant material can thus be transmitted vertically, under the influence of gravity, after opening the respective sorting and buffer floors.

By positioning the sorting disc, buffer disc and collection disc radially on top of each other, a space is centrally provided that is free of contact with plant material, and thus remains free of earth, sand, or biological material. This creates a technical space in which mechanical components can operate safely.

In a preferred embodiment, the present invention provides a system according to the first aspect of the invention, said sorting disc and said collection disc being driven by means of a centrally arranged drive system. The central arrangement of said drive system offers the advantage that damage to the drive system, due to collisions, for example by loading trolleys, or by contact with sand, earth or biological material is avoided.

In a preferred embodiment, the present invention provides a system according to the first aspect of the invention, a partition wall being provided between said centrally arranged drive system, on the one hand, and said sorting disc and said collection disc, on the other hand. Such a dividing wall additionally provides an obstacle to migration of sand, earth or biological material and thus hinders contact with the centrally arranged drive system.

In a preferred embodiment, the present invention provides a system according to the first aspect of the invention, said sorting disc being arranged rotatably. In a preferred embodiment, the present invention provides a system according to the first aspect of the invention, said first buffer disc or primary buffer disc being arranged statically. After measuring an individual plant in a sorting segment at the level of the sorting disc, the rotational movement of the sorting disc allows the plant to be transported to above the appropriate buffer segment, in which similar plants are buffered.

In a preferred embodiment, the present invention provides a system according to the first aspect of the invention, said collection disc being arranged rotatably. This way, a collection of plant material with similar features, such as length, can be vertically transferred in a buffer segment to a collection segment. The rotation of the collection disc ensures that the filled collection segment is offered to a collection section, where a collection operator can collect and store the collection of plant material with similar features in a suitable or provided place, possibly after binding together the collection of plants that has just been collected.

In a preferred embodiment, the present invention provides a system according to the first aspect of the invention, further comprising a second buffer disc or secondary buffer disc arranged concentrically between said first buffer disc and said collection disc. Preferably, said second buffer disc is also static. This offers the advantage that a stock buffer can be created and that the transfer of a collection of plants to a collection segment can go more smoothly. Preferably, the set of plants in a buffer segment of a first buffer disc is passed on to a buffer segment of the second buffer disc simultaneously with the handing over of the last plant of a set, which is still in a sorting segment at that time. The second buffer disc can then pass the packets to the collection disc in larger numbers, possibly in several turns.

In a preferred embodiment, the present invention provides a system according to the first aspect of the invention, further comprising a preloading platform provided above said sorting disc. This offers the advantage that the sorting operator, who sorts the plants individually into a separate sorting segment, has a smooth supply available on said preloading platform. Preferably, said preloading platform is a circular segment for placing a stock of non-sorted plants and an open circular segment is provided so that the sorting operator can place the individual plants in the sorting segments.

In a preferred embodiment, the present invention provides a system according to the first aspect of the invention, said sorting floor comprising at least a series of pins provided on a radially arranged axis. This offers the advantage that the visual sensor can provide a good quality of determination of plant features in a sorting segment. Features which can be determined in this way are surface of the root, length of the stem, thickness of the stem, thickness of the root, number of branches, curvature, position of the root collar, etc. The radially arranged axis is rotatable around its longitudinal axis, so that the sequence of pins on said axis can move between a horizontal and a vertical position. In the horizontal position, said pins, and consequently the sorting floor, are in a closed position; and in the vertical position, said pins, and thus the sorting floor, are in an open position - in which the plant may fall under the influence of gravity into a buffer segment set up thereunder. Furthermore, the pins are arranged at a certain distance from each other, thus allowing a good visual measurement by the sensor.

In a preferred embodiment, the present invention provides a system according to the first aspect of the invention, two sets of pins being staggered, both series of pins provided on a separate radially arranged axis. Preferably, both radially arranged axes are driven at the same time, but in opposite directions. This offers the advantage that the plant in the sorting segment retains a good central position during the fall and ends up in the correct buffer segment provided for that purpose.

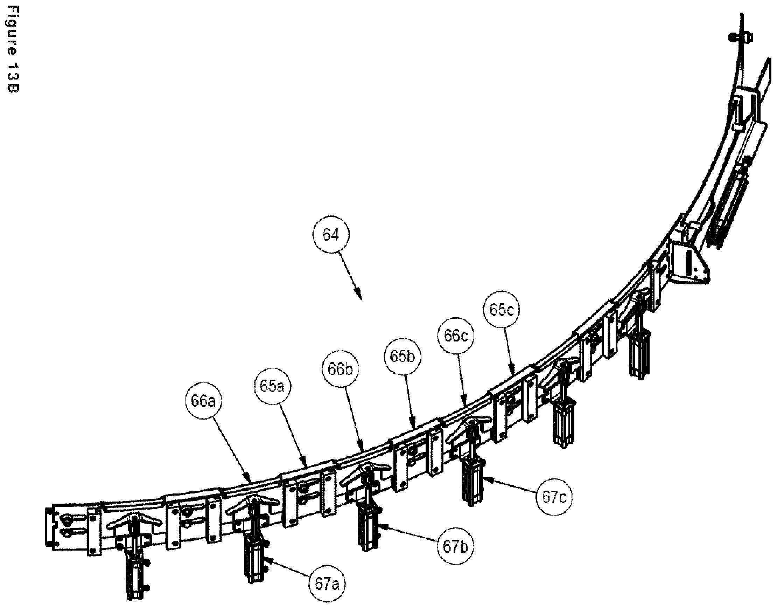

Preferably, the position of said sorting floor is checked by means of the position of the radially arranged axes. This position is checked by means of interlocking gearwheels controlled by a cam switch. The cam switch is preferably a rolling element that moves on a track. The pneumatic system will interrupt the track at the appropriate position, lowering the cam switch to a lower position and driving the gears accordingly and thus rotating the radial axes in the vertical position. After opening, the cam switch returns to the position on the track because the interruption of the track is again closed, either by the pneumatic control system or, preferably, by a suitable design of the track, as shown in Figure 13B.

In a preferred embodiment, the present invention provides a system according to the first aspect of the invention, said buffer floor comprising at least a series of pins provided on a radially arranged axis. The drive is checked by means of an electronic control system, preferably by means of a pneumatic system. Said radially arranged axis is rotatable around said axis, so that it can move between a closed and an open position of said buffer floor.

In a preferred embodiment, the present invention provides a system according to the first aspect of the invention, two sets of pins being staggered, both series of pins provided on a separate radially arranged axis. Preferably, both radially arranged axes are driven at the same time, but in opposite directions. This offers the advantage that the plant in the buffer segment retains a good central position during the fall and ends up in the correct buffer or collection segment provided for that purpose. In an additional or alternative embodiment, the buffer floor may be partially or completely closed for smaller trees or plants. If said buffer floor is partially open, partially closed, the outer circumference of the buffer floor is preferably closed.

In a preferred embodiment, the present invention provides a system according to the first aspect of the invention, further comprising a visual indicator, such as an LED display, for the transmission of instructions to a collection operator.

In a second aspect, the present invention comprises a method for sorting plants based on one or more shape features, such as length, with a system according to the first aspect of the invention, said method comprising the steps of:
- placing a plant in a sorting segment;
- rotationally moving said sorting segment to above a suitable buffer segment;
- the vertical transfer of said plant from said sorting segment to said buffer segment;
- the vertical transfer of said plant from said buffer segment to a suitable collection segment; and
- the removal of a collection of plants from a collection segment.

In a third aspect, the present invention comprises a use of a system according to the first aspect of the invention, for sorting plants such as saplings based on one or more shape features, such as length.

### Example

The invention will now be further explained on the basis of the following example, without however being limited to this.

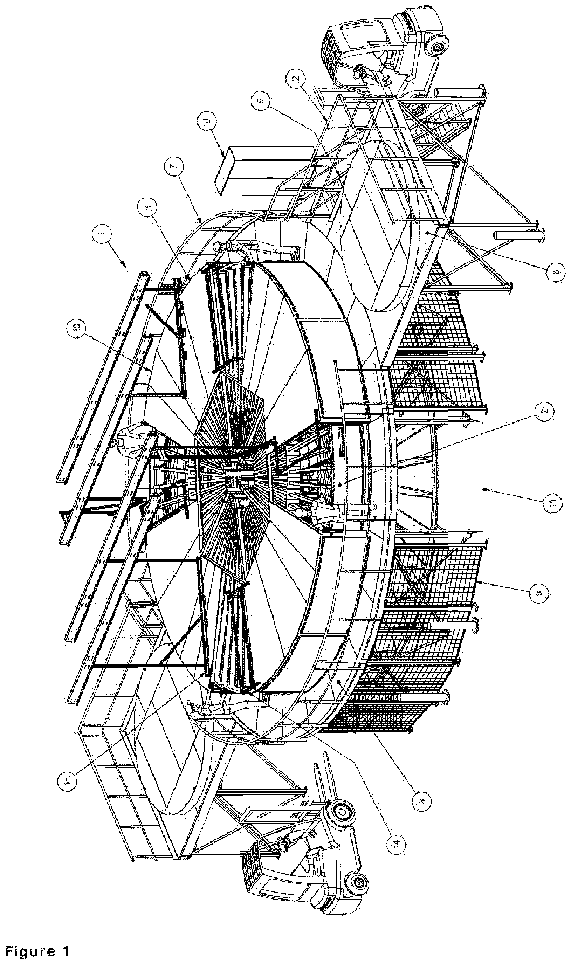

Figure 1 shows a sorting installation 1 according to an embodiment of the present invention. This sorting installation comprises a cylindrical sorting machine which is provided with a loading platform 2 on both sides. These loading platforms are suitable for the elevated supply of small trees. The loading platforms lead to a walkway 3, said walkway surrounding the cylindrical sorting machine 4. Both the loading platforms and the walkway are located at a height of ...m. staircase 5 is provided along each loading platform, the staircase providing access to the walkway. The walkway, the loading platforms and the stairways, with the exception of recesses for the supply of trees along the loading platforms 6, are fitted with a fall protection device 7. The sorting installation further comprises a control unit 8, which controls the process.

The sorting installation 1 comprises a cylindrical sorting machine 4, which is provided with a guard 9, 10. Radially below the walkway, this guard comprises a wire reinforcement 9. This wire reinforcement features recesses. These recesses are removal points 11, which allow plants to be removed from the sorting installation. Above the walkway, the guard, both radially and at the top, comprises security panels 10. The security panels are provided with four equidistant recesses, which form sorting points 12 for operators. The sorting points are located above the removal points. Each sorting point is suitable for operation by one operator. Each sorting point is provided with space for one operator 13. In addition to the operator, a camera frame 15 is provided at each sorting point. There's a camera 14 above the camera frame.

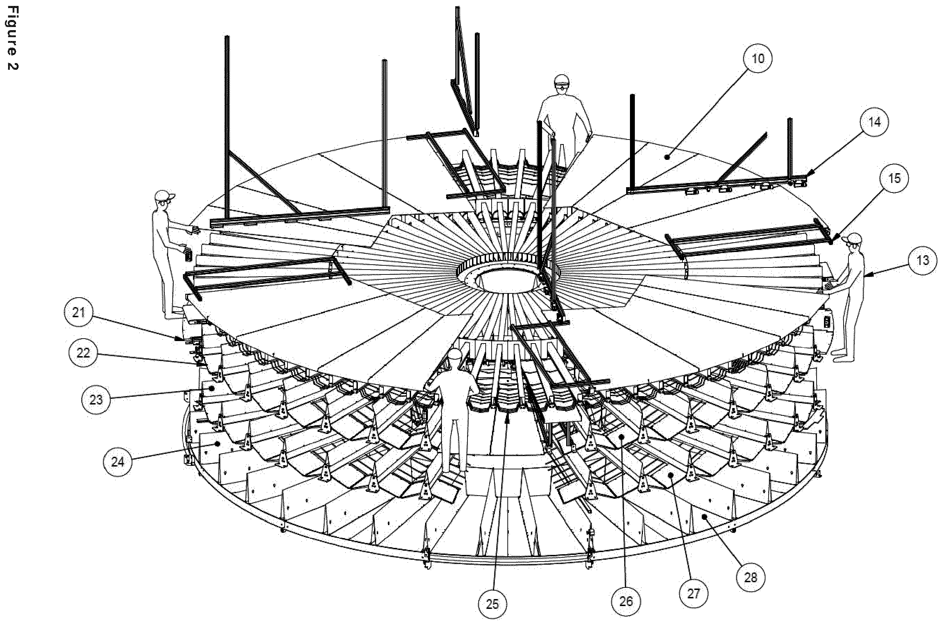

The cylindrical sorting machine is shown in more detail in Figure 2. The cylindrical sorting machine comprises a sorting disc 21 and a removal disc 24, between which two buffer discs 22, 23 are journaled. The sorting disc comprises 70 sorting segments. The buffer discs each comprise twenty-four buffer segments 26. The buffer disc bordering the sorting disc is the primary buffer disc 22 and comprises primary buffer segments 26. The buffer disc bordering the removal disc is the secondary buffer disc 23, and comprises secondary buffer segments 27.

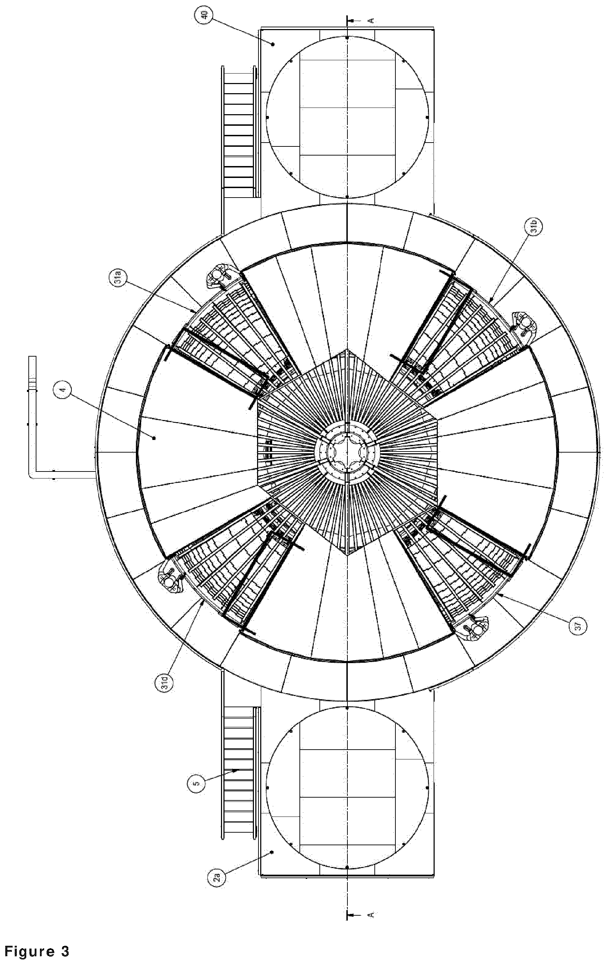

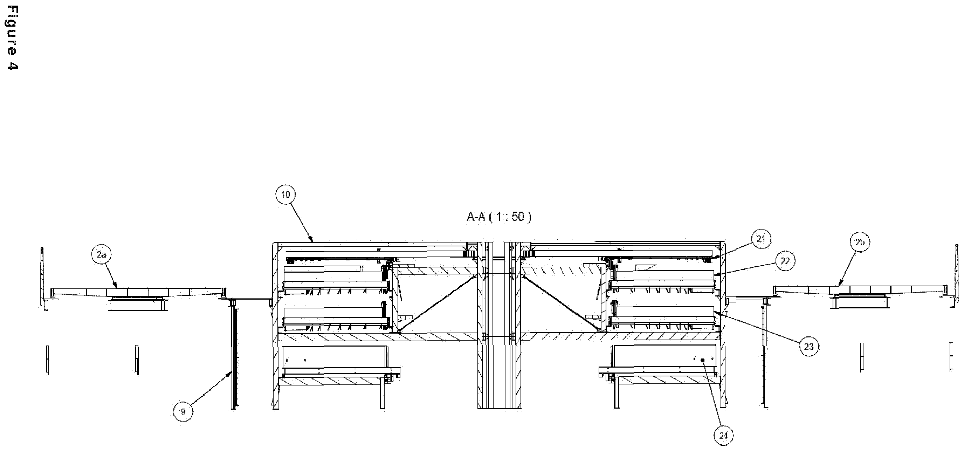

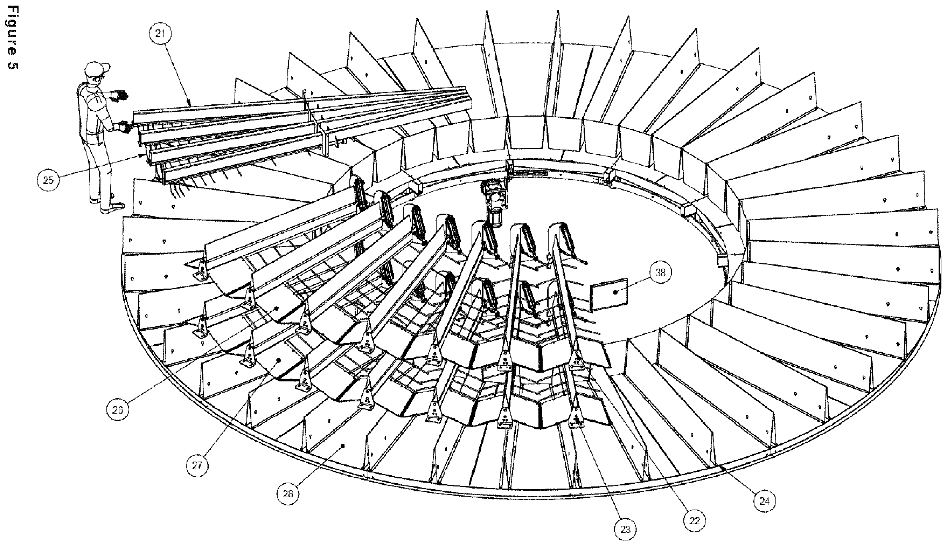

A top view of the sorting installation is shown in Figure 3. This view clarifies that the cylindrical sorting machine comprises four similar arc segments 31a, 31b, 31c, 31d, the cylindrical sorting machine being further provided with two loading platforms 2a, 2b. A side view section of the sorting installation is shown in Figure 4. It can be clearly seen that the cylindrical sorting machine consists of two static and two journaled discs: at the top the sorting disc 21, two static buffer discs 22, 23, and at the bottom the removal disc 24. These journaled discs are further shown schematically in figure 5. The removal disc is equipped with a screen 52 along removal points 11.

In the following, the operation of one arc segment of the cylindrical sorting machine is described. The operation of the other arc segments is completely analogous. Along the walkway, the cylindrical sorting machine is operated by 4 operators, one for each arc segment. This operator places one young tree or plant in each sorting segment 25. The sorting disc 21 rotates, leaving this young tree under the adjacent camera 14. This camera above the sorting segment measures the parameters of this young tree, in particular the length of the tree. Based on the parameters, the control unit 8 will allocate this young tree into one of the primary buffer segments 26. The tree will then, when the sorting disc rotates above the correct primary buffer segment, open the sorting segment in order to transfer the tree from the sorting segment 25 to the buffer segment. Thus, each buffer segment will contain sorted trees. Once the primary buffer segment contains sufficient young trees, this primary buffer segment can be emptied into the underlying secondary buffer segment 27. Once the secondary buffer segment contains a predetermined number of trees, the trees are transferred in predetermined quantities from the secondary buffer disc to a removal segment 28 of the removal disc 24. This removal disc also rotates, allowing other operators to empty the removal discs at the bottom. When emptying the removal disc, a bundle of sorted trees is removed from a removal segment. Along the removal points 11 below the walkway, screens 52 are provided. These screens inform the operator. The screen will thus show which removal segments need to be emptied. Furthermore, the screens also inform the operator about the trees in the removal segment.

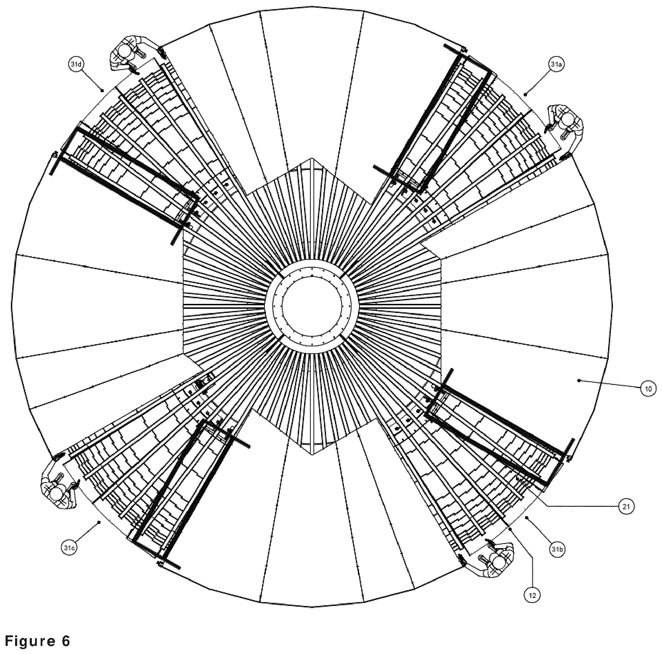

A top view of the sorting installation is shown in Figure 6. This circular sorting disc consists of four identical arc segments; each arc segment being covered by a guard 10. This guard is interrupted centrally. This guard is also interrupted at the periphery in four equidistant places, in a sorting point 12, where an operator can place young trees in the sorting segments. Each sorting point is further provided with a camera frame 15, above which a camera is installed. The sorting disc consisting of 68 sorting segments rotates, but not the guard nor the infrared (IR) camera.

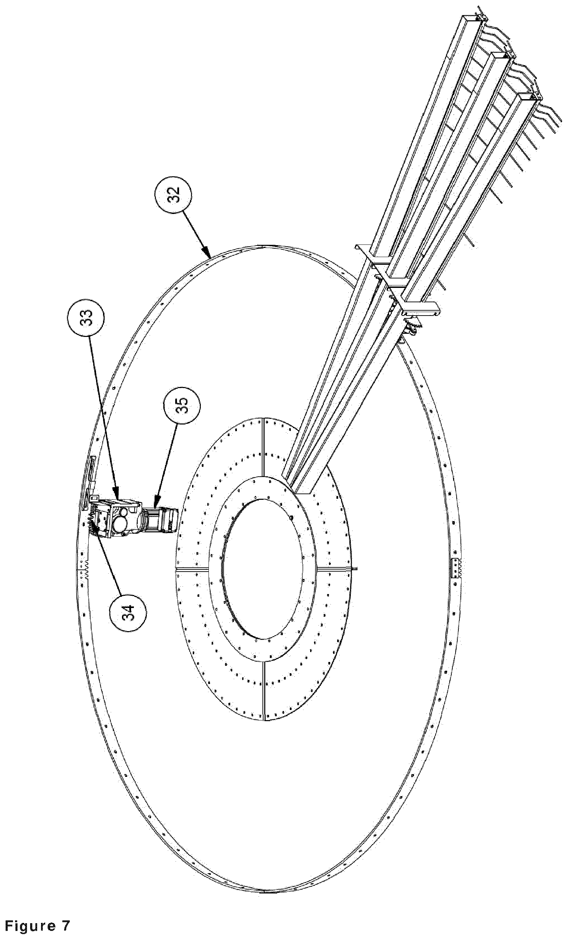

The rotation of the sorting disc is clarified in Figure 7. This sorting disc is journaled on a circumference 32, which is provided with teeth at the bottom. They are made to rotate by means of a gearwheel 34, the gearwheel being driven by an electric motor 35.

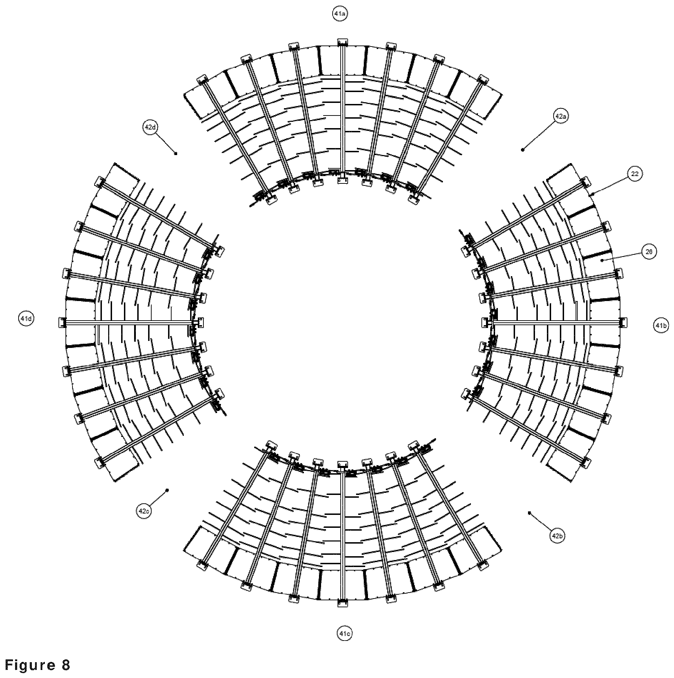

Figure 8 shows a top view representation of a buffer disc of an embodiment of the present invention. The buffer discs each comprise 24 buffer segments. These 24 buffer segments are subdivided into 4 arc segments 41a, 41b, 41d, 41c of 6 buffer segments 26 each, between which the buffer segments are interrupted. These interruptions 42a, 42b, 42c, 42d coincide with the removal points 11. Thus, sufficient space is provided for the safe emptying of the removal segments at the removal points. Both the primary buffer disc 22 and the secondary buffer disc 23 are constructed according to Figure 8.

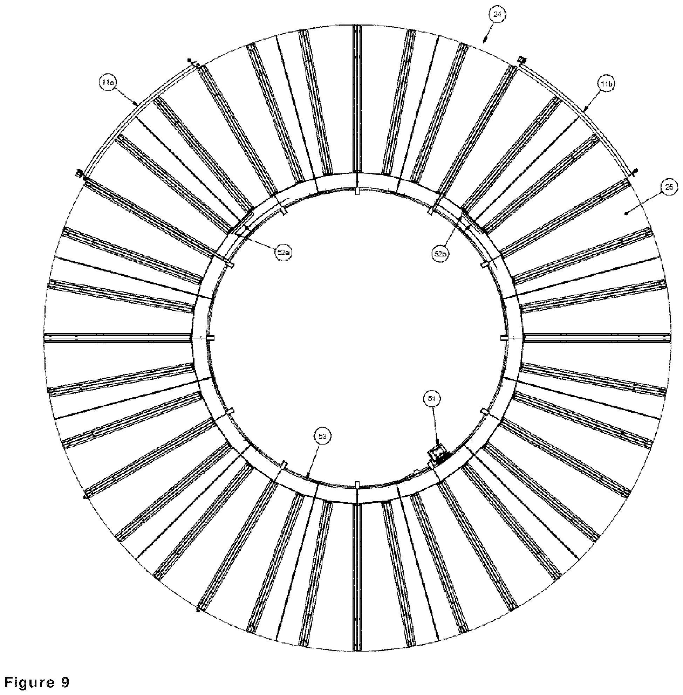

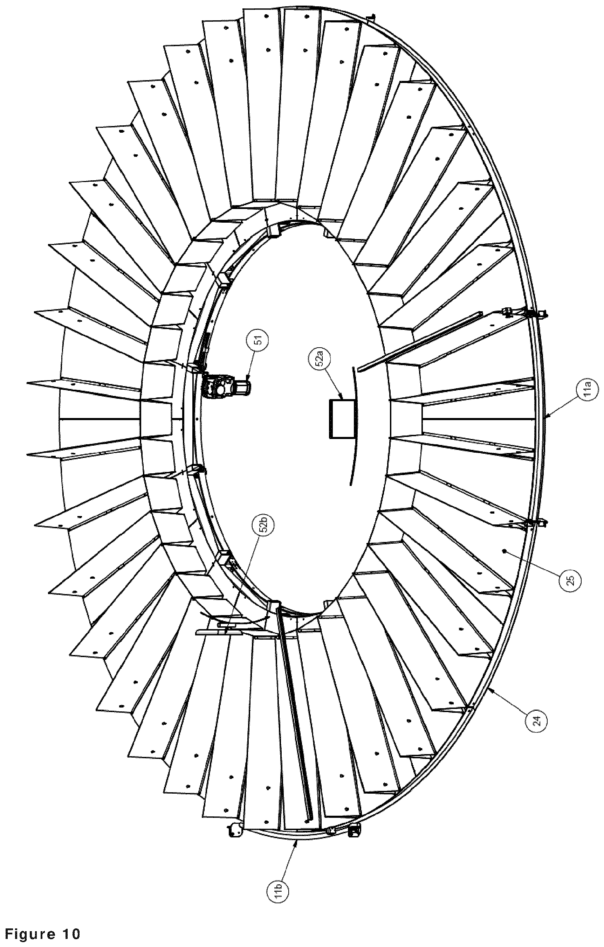

A top view of a removal disc 24 is shown in Figure 9. A perspective view is shown in Figure 10. The removal disc is fitted with an engine 51, which is connected to a circumference 53 with a gearwheel, in order to rotate the removal disc. Furthermore, the removal disc is equipped with a screen 52a, 52b at each removal point 11a, 11b. This screen gives the operator information about which removal segments can be emptied, and how many and which young trees are located in the removal segments.

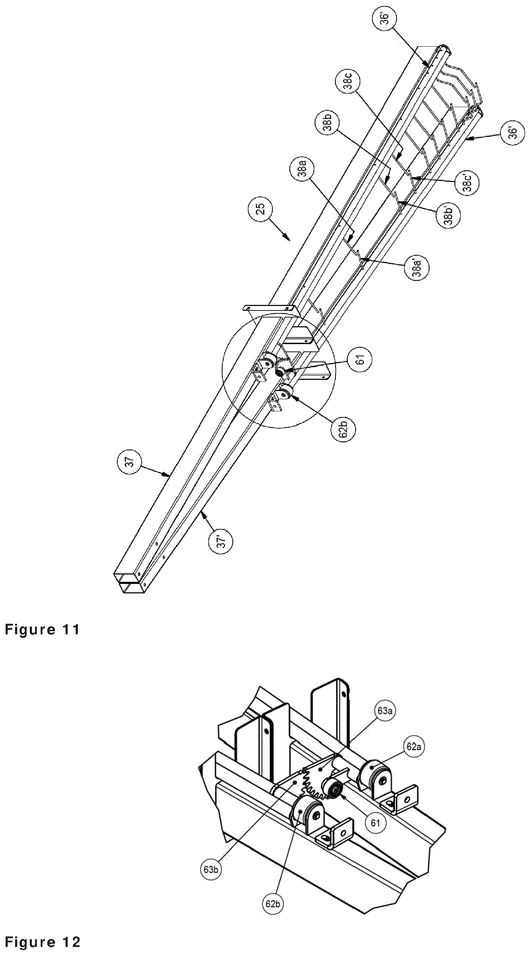

The sorting disc 21, based on the control unit 8, will transfer young trees from the sorting segment 25 to an underlying primary buffer segment 26. A sorting segment is shown in Figure 11, where the circular marking in Figure 11 is shown in further detail in Figure 12. The sorting segment 25 consists of two sorting blades 36, 36', each sorting blade comprising an arm 37, 37' and a number of sorting hooks 38a, 38b, 38c and 38a', 38b', 38c'. Adjacent sorting blades that together form one sorting segment have alternately journaled sorting hooks. The distance between two consecutive sorting hooks 38a, 38b on the same arm 37 decreases the further these sorting hooks are removed from the centre of the sorting disc. Furthermore, this sorting segment is equipped with an actuator roller 61 and two support rollers 62a, 62b. The actuator roller 61 is connected to a gearwheel 63a, which is journaled with an adjacent gearwheel 63b. The actuator roller has two positions, a first closed position and a second open position. The first closed position comprises the actuator roller in line with the two support rollers. The second, open position comprises the actuator roller that is lower than the two support rollers. When the actuator roller is in the second open position, the gearwheels will ensure that both blades 36, 36' of the sorting segment open simultaneously.

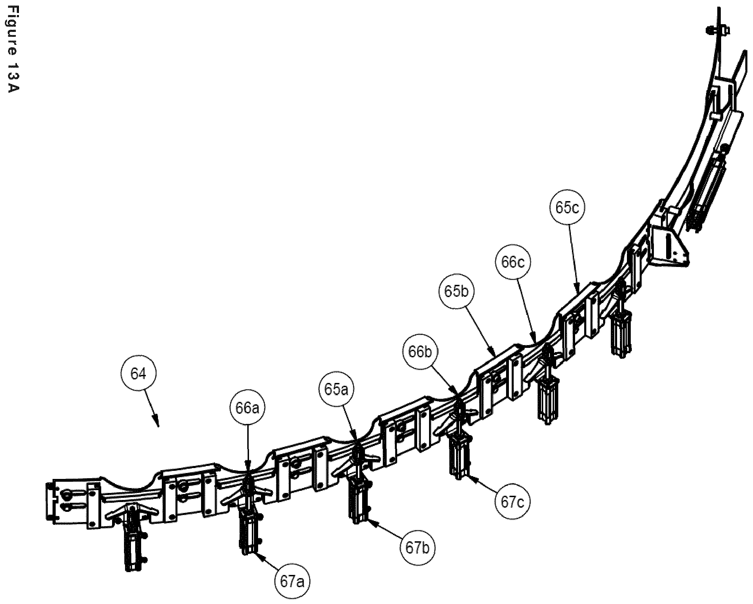

The position of the actuator roller is actuated by means of an actuator rail. The actuator rail is shown in Figure 13A in a first closed position. Figure 13B shows a second, open position of the actuator rail. The actuator rail consists of a sequence of fixed segments 65a, 65b, 65c and individually movable segments 66a, 66b, 66c. The actuator roller rests on the actuator rail, so that the position of the actuator rail also determines the position of the actuator roller. The actuator rail has a movable segment for each buffer segment and is equipped with an individually adjustable sorting actuator 67a, 67b, 67c for each buffer segment. In the example, this sorting actuator is a pneumatic piston. This pneumatic piston 67b allows the control unit to control the position of the actuator roller independently of the position of the surrounding actuator rollers 67a, 67c.

When the pneumatic piston is extended, the actuator rail is in the first closed position. The actuator roller forms a circumference in fully closed position, the support rollers and the actuator rollers being approximately in one plane.

When the pneumatic piston is retracted, the actuator rail is in the second, closed position. In this position, the actuator roller will be lower than the support rollers, causing the blades of the sorting segment to move from an adjacent position to an opposite position, wherein the blades no longer support the contents of the sorting segment. As a result, a young tree will fall from the sorting segment 25 into the underlying primary buffer segment 26. The shape of the actuator rail in the second, open position is not a circular segment but adapted to achieve a smooth opening of the sorting segment.

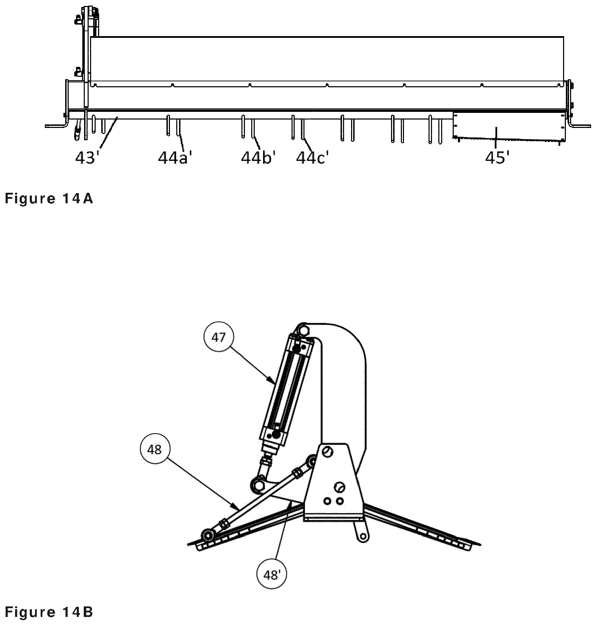

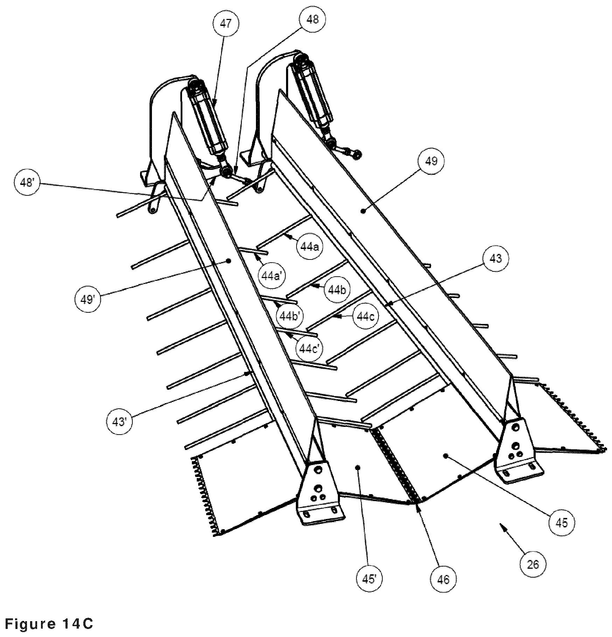

A buffer segment, comprised in the buffer disc, is shown in tangential view in Figure 14A. A radial and perspective view is shown in figures 14B and 14C respectively. These figures apply to both the primary 22 and the secondary buffer disc 23. The description relates to the primary buffer disc 22, but the secondary buffer disc 23 is completely analogous.

The buffer segment 26 comprises two adjacent buffer arms 43, 43'. These buffer arms can rotate around their axis. Between two buffer segments lies a buffer wall 49, 49'. Centrally, these adjacent buffer arms are equipped with a series of buffer hooks 44a, 44b, 44c, 44a', 44b', 44c'. The buffer hooks of adjacent buffer arms are staggered. At the peripheral end of the buffer arms they comprise a metal plane 44, 44', so that the buffer arms are completely closed here. Along the tangent between the metal planes of the adjacent buffer blades, the metal planes are provided with corresponding teeth 46, which mesh together with closed buffer blades.

The buffer segments are equipped with a buffer actuator 47, in this case a pneumatic piston. This buffer actuator the buffer segments between a first, closed position and a second, open position. The buffer actuator is located at the central end of the buffer segment and is fixed at the top. At the bottom, the buffer actuator is connected to both buffer arms 48, 48' with a drive rod, such that when the buffer segment is actuated from the closed position to the open position, both arms will open simultaneously.

Because the system 1 is divided into four different sectors, up to four different types of plants can be sorted on the same system. The control system can be configured to track the position of types of plant material and thus to sort correctly. The type of plant can also be communicated by means of the LED system to a collection operator.

## Claims

1. System for sorting plants (1), such as saplings, based on one or more shape features, such as length, said system comprising at least:
- a sorting disc (21), radially subdivided into multiple sorting segments (25), each sorting segment being suitable for receiving a plant, and each sorting segment being configured with a sorting floor having an open and closed position;
- at least a first buffer disc (22), arranged under said sorting disc (21) and radially subdivided into multiple buffer segments (26), each buffer segment being suitable for buffering multiple plants and each buffer segment (26) being configured with a buffer floor having an open and closed position;
- a collection disc (24), arranged under said first buffer disc (22) and radially subdivided into multiple collection segments (28), each collection segment being suitable for receiving multiple plants;
- a sensor (14) for determining one or more shape features of a plant in a sorting segment; and
- an electronic control system (8) for receiving an electronic signal from said sensor (14), controlling said sorting floor, thus passing said plant in said sorting segment to a suitable buffer segment, and controlling said buffer floor.

2. System according to claim 1, said sorting disc (21) and said collection disc (24) being driven by means of a centrally arranged drive system.

3. System according to claim 1 or 2, a partition wall being provided between said centrally arranged drive system, on the one hand, and said sorting disc (21) and said collection disc (24), on the other hand.

4. System according to at least one of claims 1 to 3, said sorting disc (21) being arranged rotatably.

5. System according to at least one of claims 1 to 4, said first buffer disc (22) being arranged statically.

6. System according to at least one of claims 1 to 5, said collection disc (24) being arranged rotatably.

7. System according to at least one of claims 1 to 6, further comprising a second buffer disc (23) arranged concentrically between said first buffer disc (22) and said collection disc (24).

8. System according to at least one of claims 1 to 7, further comprising a preloading platform (6) provided above said sorting disc (21).

9. System according to at least one of claims 1 to 8, said sorting floor comprising at least a series of pins provided on a radially arranged axis.

10. System according to claim 9, two sets of pins being staggered, both series of pins provided on a separate radially arranged axis.

11. System according to at least one of claims 1 to 10, said buffer floor comprising at least a series of pins provided on a radially arranged axis.

12. System according to claim 11, two sets of pins being staggered, both series of pins provided on a separate radially arranged axis.

13. System according to at least one of claims 1 to 12, further comprising a visual indicator, such as an LED display, for the transmission of instructions to a collection operator.

14. A method for sorting plants based on one or more shape features, such as length, with a system according to at least one of the preceding claims 1 to 13, said method comprising the steps of:
- placing a plant in a sorting segment (25);
- rotationally moving said sorting segment (25) to above a suitable buffer segment (26);
- the vertical transfer of said plant from said sorting segment (25) to said buffer segment (26);
- the vertical transfer of said plant from said buffer segment (26) to a suitable collection segment (28); and
- the removal of a collection of plants from a collection segment (28).

15. Use of a system according to at least one of preceding claims 1 to 13, for sorting plants, such as saplings, based on one or more shape features, such as length.

## Patentansprüche

1. System zum Sortieren von Pflanzen (1) wie z.B. Schösslingen, auf der Grundlage eines oder mehrerer Formmerkmale wie z B. Länge, wobei das System mindestens Folgendes umfasst:
- eine Sortierscheibe (21), die radial in mehrere Sortiersegmente (25) unterteilt ist, wobei jedes Sortiersegment zum Aufnehmen einer Pflanze geeignet ist und jedes Sortiersegment mit einem Sortierboden gestaltet ist, der eine offene und eine geschlossene Position aufweist;
- mindestens eine erste Pufferscheibe (22), die unter der Sortierscheibe (21) angeordnet und radial in mehrere Puffersegmente (26) unterteilt ist, wobei jedes Puffersegment zum Puffern mehrerer Pflanzen geeignet ist und jedes Puffersegment (26) mit einem Pufferboden gestaltet ist, der eine offene und eine geschlossene Position aufweist;
- eine Sammelscheibe (24), die unter der ersten Pufferscheibe (22) angeordnet und radial in mehrere Sammelsegmente (28) unterteilt ist, wobei jedes Sammelsegment zum Aufnehmen mehrerer Pflanzen geeignet ist;
- einen Sensor (14) zum Bestimmen eines oder mehrerer Formmerkmale einer Pflanze in einem Sortiersegment; und
- ein elektronisches Steuersystem (8) zum Empfangen eines elektronischen Signals von dem Sensor (14), Steuern des Sortierbodens, wodurch die Pflanze in dem Sortiersegment zu einem geeigneten Puffersegment geleitet wird, und zum Steuern des Pufferbodens.

2. System nach Anspruch 1, wobei die Sortierscheibe (21) und die Sammelscheibe (24) mittels eines zentral angeordneten Antriebssystems angetrieben werden.

3. System nach Anspruch 1 oder 2, wobei eine Trennwand zwischen dem zentral angeordneten Antriebssystem einerseits und der Sortierscheibe (21) und der Sammelscheibe (24) andererseits bereitgestellt ist.

4. System nach mindestens einem der Ansprüche 1 bis 3, wobei die Sortierscheibe (21) drehbar angeordnet ist.

5. System nach mindestens einem der Ansprüche 1 bis 4, wobei die erste Pufferscheibe (22) statisch angeordnet ist.

6. System nach mindestens einem der Ansprüche 1 bis 5, wobei die Sammelscheibe (24) drehbar angeordnet ist.

7. System nach mindestens einem der Ansprüche 1 bis 6, ferner eine zweite Pufferscheibe (23) umfassend, die konzentrisch zwischen der ersten Pufferscheibe (22) und der Sammelscheibe (24) angeordnet ist.

8. System nach mindestens einem der Ansprüche 1 bis 7, ferner eine Vorladeplattform (6) umfassend, die über der Sortierscheibe (21) bereitgestellt ist.

9. System nach mindestens einem der Ansprüche 1 bis 8, wobei der Sortierboden mindestens eine Reihe von Stiften umfasst, die auf einer radial angeordneten Achse bereitgestellt sind.

10. System nach Anspruch 9, wobei zwei Sätze von Stiften zueinander versetzt angeordnet sind, wobei beide Reihen von Stiften auf einer separaten radial angeordneten Achse angeordnet sind.

11. System nach mindestens einem der Ansprüche 1 bis 10, wobei der Pufferboden mindestens eine Reihe von Stiften umfasst, die auf einer radial angeordneten Achse bereitgestellt sind.

12. System nach Anspruch 11, wobei zwei Sätze von Stiften zueinander versetzt angeordnet sind, wobei beide Reihen von Stiften auf einer separaten radial angeordneten Achse angeordnet sind.

13. System nach mindestens einem der Ansprüche 1 bis 12, ferner einen optischen Indikator wie eine LED-Anzeige, zur Übertragung von Anweisungen an eine Sammlungsbedienperson, umfassend.

14. Ein Verfahren zum Sortieren von Pflanzen auf der Grundlage eines oder mehrerer Formmerkmale wie z.B. Länge mit einem System nach mindestens einem der vorhergehenden Ansprüche 1 bis 13, wobei das Verfahren die folgenden Schritte umfasst:
- Platzieren einer Pflanze in einem Sortiersegment (25);
- drehendes Bewegen des Sortiersegments (25) zu einer Stelle über einem geeigneten Puffersegment (26);
- vertikaler Transfer der Pflanze von dem Sortiersegment (25) zu dem Puffersegment (26);
- vertikaler Transfer der Pflanze von dem Puffersegment (26) zu einem geeigneten Sammelsegment (28); und
- Entnahme einer Sammlung von Pflanzen von einem Sammelsegment (28).

15. Verwendung eines Systems nach mindestens einem der vorhergehenden Ansprüche 1 bis 13 zum Sortieren von Pflanzen wie z.B. Schösslingen auf der Grundlage eines oder mehrerer Formmerkmale wie z.B. Länge.

## Revendications

1. Système de triage de plantes (1), telles que de jeunes arbres, sur la base d'une ou plusieurs caractéristiques de forme, telles que la longueur, ledit système comprenant au moins :
- un disque de triage (21), subdivisé radialement en de multiples segments de triage (25), chaque segment de triage étant apte à recevoir une plante, et chaque segment de triage étant configuré avec un plancher de triage ayant une position ouverte et une position fermée ;
- au moins un premier disque tampon (22), disposé sous ledit disque de triage (21) et subdivisé radialement en de multiples segments tampons (26), chaque segment tampon étant apte à stocker temporairement de multiples plantes et chaque segment tampon (26) étant configuré avec un plancher tampon ayant une position ouverte et une position fermée ;
- un disque de collecte (24), disposé sous le premier disque tampon (22) et divisé radialement en de multiples segments de collecte (28), chaque segment de collecte étant apte à recevoir de multiples plantes ;
- un capteur (14) pour déterminer une ou plusieurs caractéristiques de forme d'une plante dans un segment de triage ; et
- un système de commande électronique (8) pour recevoir un signal électronique à partir dudit capteur (14), commander ledit plancher de triage, faisant ainsi passer la plante dans ledit segment de triage dans un segment tampon approprié, et commander ledit plancher tampon.

2. Système selon la revendication 1, ledit disque de triage (21) et ledit disque de collecte (24) étant entraînés au moyen d'un système d'entraînement disposé au centre.

3. Système selon la revendication 1 ou 2, une paroi de séparation étant prévue entre ledit système d'entraînement disposé au centre, d'une part, et ledit disque de triage (21) et ledit disque de collecte (24), d'autre part.

4. Système selon au moins l'une des revendications 1 à 3, ledit disque de triage (21) étant agencé de manière rotative.

5. Système selon au moins l'une des revendications 1 à 4, ledit premier disque tampon (22) étant agencé de manière statique.

6. Système selon au moins l'une des revendications 1 à 5, ledit disque de collecte (24) étant agencé de manière rotative.

7. Système selon l'une au moins des revendications 1 à 6, comprenant en outre un second disque tampon (23) disposé concentriquement entre ledit premier disque tampon (22) et ledit disque de collecte (24).

8. Système selon l'une au moins des revendications 1 à 7, comprenant en outre une plate-forme de préchargement (6) située au-dessus dudit disque de triage (21).

9. Système selon l'une au moins des revendications 1 à 8, ledit plancher de triage comprenant au moins une série de broches disposées sur un axe agencé radialement.

10. Système selon la revendication 9, deux ensembles de broches étant décalés, les deux séries de broches étant prévues sur un axe agencé radialement distinct.

11. Système selon l'une au moins des revendications 1 à 10, ledit plancher tampon comprenant au moins une série de broches disposées sur un axe agencé radialement.

12. Système selon la revendication 11, deux ensembles de broches étant décalés, les deux séries de broches étant prévues sur un axe agencé radialement distinct.

13. Système selon l'une au moins des revendications 1 à 12, comprenant en outre un indicateur visuel, tel qu'un écran à LED, pour la transmission d'instructions à un opérateur de collecte.

14. Procédé de triage de plantes sur la base d'une ou plusieurs caractéristiques de forme, telles que la longueur, avec un système selon au moins l'une des revendications précédentes 1 à 13, ledit procédé comprenant les étapes suivantes :
- le placement d'une plante dans un segment de triage (25) ;
- le déplacement par rotation dudit segment de triage (25) au-dessus d'un segment tampon approprié (26) ;
- le transfert vertical de ladite plante dudit segment de triage (25) audit segment tampon (26) ;
- le transfert vertical de ladite plante dudit segment tampon (26) à un segment de collecte approprié (28) ; et
- le retrait d'un regroupement de plantes d'un segment de collecte (28).

15. Utilisation d'un système selon au moins l'une des revendications précédentes 1 à 13, pour trier des plantes, telles que de jeunes arbres, sur la base d'une ou de plusieurs caractéristiques de forme, telles que la longueur.
